# EUROPEAN PATENT SPECIFICATION

(11) **EP 2 913 111 B1**
(45) Date of publication and mention of the grant of the patent: **02.08.2017**
(21) Application number: 13848274.0
(22) Date of filing: 29.09.2013
(51) Int. Cl.: B02C 23/00, F16H 7/02, F16H 7/12, B02C 4/42, F16H 7/08

(54) **MILL ROLLER TRANSMISSION MECHANISM AND MILL COMPRISING THE MECHANISM**
MÜHLENWALZENÜBERTRAGUNGSMECHANISMUS UND MÜHLE MIT DEM MECHANISMUS
MÉCANISME DE TRANSMISSION DE LAMINOIR ET BROYEUR COMPRENANT LE MÉCANISME

(30) Priority: 23.10.2012 CN 201220546396 U
(43) Date of publication of application: 02.09.2015
(73) Proprietor: Cofco Engineering Equipment (Zhangjiakou) Co. Ltd, Industry Cluster District Zhangjiakou Hebei 076650 (CN)
(72) Inventor: XU, Guiqing, Zhangjiakou, Hebei 076650 (CN); WEI, Suoming, deceased (CN)
(74) Representative: Wächter, Jochen
(86) International application number: PCT/CN2013/084639
(87) International publication number: WO 2014/063560

(56) References cited:
- CN-U- 2 070 645
- CN-U- 201 921 712
- CN-U- 202 992 060
- CN-Y- 2 458 067
- CN-Y- 200 984 515
- CN-Y- 201 223 807
- DE-A1- 10 347 860
- DE-A1- 10 347 860
- GB-A- 541 583
- GB-A- 2 373 305

## Description

### Field of the Invention

The present invention relates to the domain of milling equipment, in particular to a mill roller transmission mechanism and a mill comprising the mechanism.

### Background of the Invention

In the prior art, mills usually employs a three-roller transmission structure comprising a fast roller with wedges, a slow roller with teeth, and a tensioning wheel with wedges, and the transmission is implemented with a toothed belt. However, in such a three-roller transmission system, the tensioning mechanism is usually tensioned up eccentrically and rigidly; specifically, the tensioning wheel is directly mounted on an eccentric shaft, and is slightly biased as the eccentric shaft is turned, so that the toothed belt is tensioned up. Such a structure has some drawbacks, for example, at the moment when the mill is started, or when hard foreign matters are entrapped between the engaged surfaces of the toothed belt 4 and the roller, the tension on the toothed belt will increase instantly, resulting in over-tensioning and shortened life of the toothed belt. Therefore, a tensioning mechanism that can alleviate or avoid over-tensioning of the toothed belt and thereby overcome the drawback described above is required.

In addition, the toothed belts used in existing equipment usually have an outer toothed surface with circular-arc teeth arranged at 8 mm pitch or 14 mm pitch (as per Chinese Standard). It is proved through calculations and practices: toothed belts with 8 mm tooth pitch have low transmission power because the mated area between the belt and the gear teeth is small; for toothed belts with 14 mm tooth pitch, though the mate area is large, the angle of contact is small because the pitch is too high, and it is difficult to mount and assemble such a toothed belt because both the fast roller and the tensioning wheel have wedges.

GB 541 583 A, which represents the closest prior art to the subject-matter of claim 1, discloses a mill roller transmission mechanism comprising a frame, a fast roller, a fast chain wheel, a slow roller, a slow chain wheel and a chain.

### Summary of the Invention

The object of the present invention is to provide a tensioning mechanism that can alleviate or avoid over-tensioning of toothed belt.

To attain the object described above, the present invention provides a mill roller transmission mechanism, comprising a frame, a fast roller, a slow roller, and a toothed belt, wherein, the toothed belt is provided with an inner toothed surface and an outer toothed surface, the inner toothed surface of the toothed belt is engaged with an outer peripheral surface of the fast roller, the outer toothed surface of the toothed belt is engaged with an outer peripheral surface of the slow roller; the mill roller transmission mechanism further comprises: a tensioning seat fixed to the frame; a support shaft, with one end pivot-jointed to the tensioning seat; a swing frame, with one side fixed to the support shaft and driving the support shaft to rotate; a rolling shaft, pivot-jointed to the other side of the swing frame, with its axial direction parallel to the axial direction of the support shaft; a tensioning wheel, with its central axle hole fitted over and fixed to the rolling shaft and its outer peripheral surface engaged with the inner toothed surface of the toothed belt; a press mechanism, connected between the swing frame and the tensioning seat in an elastically adjustable manner, and designed to adjust the deflection angle of the swing frame; the press mechanism comprises: a tension rod, with one end connected to the tensioning seat and the other end provided with threads; a spring, fitted over the rod of the tension rod, with its top end biased on the swing frame; an adjusting nut, fitted over the end of the tension rod provided with threads and abutting to the bottom of the spring; wherein the tension rod is pivot-jointed to the tensioning seat via the connecting shaft; a first gasket arranged between the top end of the spring and the swing frame, and a second gasket arranged between the spring and the adjusting nut; wherein the first gasket is arranged with a positioning pivot point at the engaging part to the swing frame, and the swing frame is arranged with a recessed part corresponding to the positioning pivot point.

After adjustment, the press mechanism presses the swing frame, so that one side of the swing frame drives the support shaft to rotate and the other side of the swing frame drives the rolling shaft and the tensioning wheel to deflect, and thereby the outer peripheral surface of the tensioning wheel abuts against the inner toothed surface of the toothed belt and tensions up the toothed belt.

Preferably, the inner toothed surface of the toothed belt is provided with V-wedge grooves arranged in the circumferential direction of the inner toothed surface of the toothed belt, and the outer peripheral surface of the fast roller is provided with ribs, along the circumferential direction, corresponding to the V-wedge grooves.

Preferably, the outer toothed surface of the toothed belt is provided with tooth bodies formed perpendicular to the length direction of the toothed belt in the circumferential direction, and the outer peripheral surface of the slow roller is provided with teeth in the circumferential direction, which are designed to engage with the tooth bodies for transmission.

Preferably, the pitch of the tooth bodies is 10 mm.

Preferably, the outer peripheral surface of the tensioning wheel is a smooth curved surface.

In an embodiment of the present invention, a mill comprising the mill roller transmission mechanism described in the above embodiment is also provided.

In the mill roller transmission mechanism and the mill comprising the mill roller transmission mechanism set forth in the present invention, the tensioning mechanism is designed to be an elastic adjustable mechanism, so that when the tensioning wheel is engaged with the inner tooth wall of the toothed belt, there is a margin for buffering, and, at the moment the mill is started or when any hard foreign matter is entrapped between the engaged surfaces of the toothed belt and roller, the tension of the toothed belt may be buffered through the elasticity of the tensioning mechanism; thus, over-tensioning of the toothed belt can be avoided, and the service life of the toothed belt can be prolonged. In addition, the pitch of the teeth on the outer toothed surface of the toothed belt is optimized, to improve power transmission and stability. The outer peripheral surface of the tensioning wheel is optimized, to make it easy to mount the toothed belt.

Other characteristics and advantages of the present invention will be further detailed in the embodiments hereunder.

### Brief Description of the Drawings

The accompanying drawings are provided here to facilitate further understanding on the present invention, and are a part of this document. They are used in conjunction with the following embodiments to explain the present invention, but shall not be comprehended as constituting any limitation to the present invention. Among the figures:
Fig. 1 is schematic structural diagram of the mill roller transmission mechanism provided in the embodiments of the present invention;
Fig. 2 is a side sectional view of the mill roller transmission mechanism provided in the embodiments of the present invention;
Fig. 3 is a partial enlarged structural diagram of the toothed belt provided in the embodiments of the present invention.

**Brief Description of the Symbols**

| | | | |
|---|---|---|---|
| 1 | fast roller | 2 | slow roller |
| 3 | tensioning wheel | 4 | toothed belt |
| 41 | V-wedge groove | 42 | tooth body |
| 51 | tensioning seat | 52 | support shaft |
| 53 | swing frame | 531 | recessed part |
| 54 | rolling shaft | 55 | tension rod |
| 56 | connecting shaft | 57 | spring |
| 58 | adjusting nut | 59 | first gasket |
| 591 | positioning pivot point | 6 | second gasket |
| 7 | frame | | |

### Detailed Description of the Embodiments

Hereunder the embodiments of the present invention will be detailed, with reference to the accompanying drawings. It should be appreciated that the embodiments described here are only provided to describe and explain the present invention, but shall not be deemed as constituting any limitation to the present invention.

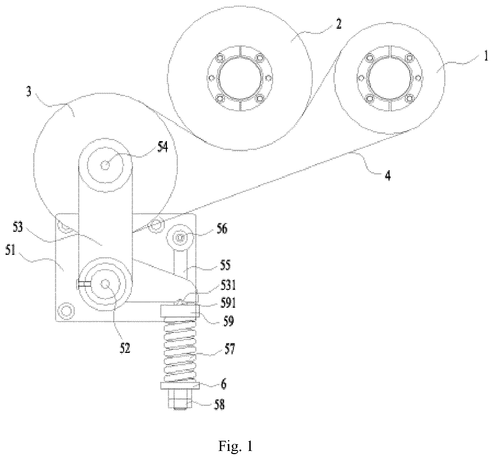

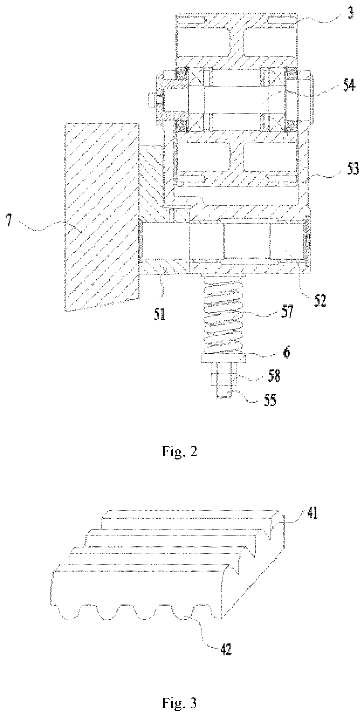

As shown in Fig. 1 and Fig. 2, the mill roller transmission mechanism set forth in the present invention comprises a frame 7, a fast roller 1, a slow roller 2, and a toothed belt 4, the toothed belt 4 is provided with an inner toothed surface and an outer toothed surface, the inner toothed surface of the toothed belt 4 is engaged with an outer peripheral surface of the fast roller 1, the outer toothed surface of the toothed belt 4 is engaged with an outer peripheral surface of the slow roller 2; the mill roller transmission mechanism further comprises: a tensioning seat 51 fixed to the frame 7; a support shaft 52, with one end pivot-jointed to the tensioning seat 51; a swing frame 53, with one side fixed to the support shaft 52 and driving the support shaft 52 to rotate; a rolling shaft 54, pivot-jointed to the other side of the swing frame 53, with its axial direction parallel to the axial direction of the support shaft 52; a tensioning wheel 3, with its central axle hole fitted over and fixed to the rolling shaft 54 and its outer peripheral surface engaged with the inner toothed surface of the toothed belt 4; a press mechanism, connected between the swing frame 53 and the tensioning seat 51 in an elastically adjustable manner, and designed to adjust the deflection angle of the swing frame 53; after adjustment, the press mechanism presses the swing frame 53, so that one side of the swing frame 53 drives the support shaft 52 to rotate and the other side of the swing frame 53 drives the rolling shaft 54 and the tensioning wheel 3 to deflect, and thereby the outer peripheral surface of the tensioning wheel 3 abuts against the inner toothed surface of the toothed belt 4 and tensions up the toothed belt 4.

The toothed belt 4 is engaged with the rollers via its inner toothed surface and outer toothed surface, as shown in Fig. 1, the toothed belt 4 can be tensioned up when the tensioning wheel 3 is biased to the left. The tensioning wheel 3 shown in Fig. 1 is fixed to the swing frame 53, the swing frame 53 is connected to the tensioning seat 51 via the support shaft 52 and can rotate around the support shaft 52; the toothed belt 4 will be tensioned up when the swing frame 53 is biased to the left and will be loosen up when the swing frame 53 is biased to the right. The pressing force applied by the tensioning wheel 3 on the toothed belt 4 depends on the elastic force exerted by the press mechanism on the tensioning wheel 3; the press mechanism pushes the swing frame 53 to rotate in counter clockwise direction, and thereby drives the tensioning wheel 3 to bias to the left. In the actual application, the toothed belt 4 is subject to pulling force instantly when the mill is started; since the tensioning wheel 3 is not tensioned up rigidly, it is pressed to bias to the right at the moment the toothed belt 4 is subject to the pulling force; thus, the press mechanism is elastically compressed, and thereby provides an effect of alleviating the tension on the toothed belt 4 and protects the toothed belt 4 from over-tensioned and avoids shortened service life of the toothed belt 4.

As shown in Fig. 1, specifically, the press mechanism can be constructed to comprise: a tension rod 55, with one end connected to the tensioning seat 51 and the other end provided with threads; a spring 57, fitted over the rod of the tension rod 57, with its top end biased on the swing frame 53; an adjusting nut 58, fitted over the end of the tension rod 55 provided with threads and abutting to the bottom of the spring 57.

In such a press mechanism, the magnitude of elastic force is controlled by means of the adjusting nut 58 fitted over the tension rod 55 at the bottom end of the spring 57; the spring 57 will be compressed and the top end of the spring 57 will abut against the swing frame 53 when the adjusting nut 58 is turned to move upwards; if the elastic force is too high, the adjusting nut 58 can be turned to move downwards and release some space, so that the stress on the swing frame 53 in counter clockwise direction is decreased, and thereby the tensioning force exerted by the tensioning wheel 3 on the toothed belt 4 is decreased. A benefit of utilizing the spring 57 is: in case the tension on the toothed belt 4 is increased suddenly, the spring 57 can be compressed accordingly under the stress, and thereby provides a protective function for the toothed belt 4.

Since the swing frame 53 rotates around the support shaft 52 under the stress, the spring 57 should have some deflection in the direction of rotation of the swing frame 53, so that the spring 57 can exert spring force on the swing frame 53 in a better way. Therefore, in an embodiment of the present invention, the tension rod 55 is pivot-jointed to the tensioning seat 51 via a connecting shaft 56. As shown in Fig. 1, after the swing frame 53 deflects to the left, the spring 57 moves upwards from the top end, and deflects to an angle around the connecting shaft 56 along with the tension rod 55, but the direction of force exerted by the top end on the swing frame 53 has no change essentially; thus, the stress on the swing frame 53 will not be decreased owing to the deflection angle, and the tensioning force exerted by the tensioning wheel 3 on the toothed belt 4 will be more stable.

Furthermore, as shown in Fig. 1, to abut against the swing frame 53 more firmly, a first gasket 59 is provided between the top end of the spring 57 and the swing frame 53, and a second gasket 6 is provided between the spring 57 and the adjusting nut 58.

With the first gasket 59 and the second gasket 6, the stressed area of the top end and bottom end of the spring 57 can be increased, and thereby the mated area between the spring 57 and the swing frame 53 can be increased, and the spring force can be transferred more uniformly. Thus, the stress on the spring 57 is uniform, and the stress on the swing frame 53 is also uniform.

To ensure steady engagement between the first gasket 59 and the swing frame 53, as shown in Fig. 1, the first gasket 59 is arranged with a positioning pivot point 591 located on the jointing part with the swing frame 53, and the swing frame 53 is arranged with a recessed part 531 corresponding to the positioning pivot point 591.

With the engagement between the positioning pivot point 591 and the recessed part 531, the first gasket 59 will not off-center when it abuts against the swing frame 53, and thereby the abutting between the first gasket 59 and the swing frame 53 will be more stable. Of course, in order to further improve abutting stability, there may be can comprise a plurality of positioning pivot points 591.

In an embodiment of the present invention, as shown in Fig. 2, the inner toothed surface of the toothed belt 4 is provided with V-wedge grooves 41 (PL tooth wedges) arranged in the circumferential direction of the inner toothed surface, and the outer peripheral surface of the fast roller 1 is provided with ribs (PL tooth outline), along the circumferential direction, corresponding to the V-wedge grooves 41. The outer toothed surface of the toothed belt 4 is provided with tooth bodies 42 formed perpendicular to the length direction of the toothed belt 4 in the circumferential direction, and the outer peripheral surface of the slow roller 2 is provided with teeth in the circumferential direction, which are designed to engage with the tooth bodies 42 for transmission.

With the engagement between the ribs and the V-wedge grooves 41, the fast roller 1 is engaged well with the toothed belt 4 for transmission; with the engagement between the tooth bodies 42 and the teeth, the slow roller 2 and the toothed belt 4 are engaged with each other for transmission.

Furthermore, in commonly used toothed belts 4, the pitch of the tooth bodies 42 is 8 mm. Since the mated area between the tooth bodies 42 and corresponding teeth on the slow roller 2 is small, the transmission power is low; in toothed belts 4 in which the pitch of the tooth bodies is 14 mm, though the mated area between the tooth bodies 42 and the teeth are large, the angle of contact is small because the pitch is too high, consequently, the transmission power is degraded. Therefore, in an embodiment of the present invention, the pitch of the tooth bodies 42 is 10 mm, the tooth bodies 42 are arranged with double-arc tooth outline (10 mm double-arc R tooth outline), and the engaged area between tooth bodies and teeth is larger than that in the case of 8 mm pitch but is smaller than that in the case of 14 mm pitch, and is ideal for short-distance transmission; in addition, the angle of contact between the tooth bodies 42 and the teeth is appropriate. Therefore, a toothed belt 4 with such tooth bodies 42 has characteristics including free of off-centering, free of jumping over teeth, high transmitted power, smooth movement, and low noise.

Furthermore, to ease the installation of the toothed belt 4, the outer peripheral surface of the tensioning wheel 3 can be arranged as a smooth curved surface. Since there is no rib that may otherwise hamper the fitting of the toothed belt 4 over the tensioning wheel 3, the toothed belt 4 can be fitted over the tensioning wheel 3 easily; since the stressed area on the inner toothed surface of the toothed belt 4 is large, the friction force is high, and no slippage phenomenon will occur; thus, the installation is convenient, time-saving and labor saving, while normal transmission is realized.

In an embodiment of the present invention, a mill comprising the mill roller transmission mechanism described in the above embodiment is also provided.

Hereunder the operating principle of the mill roller transmission mechanism will be described briefly:
When the mill roller transmission mechanism is in a still state, the adjusting nut 58 can be adjusted, so that the adjusting nut 58 moves upwards and compresses the spring 57, and the spring 57 abuts against the swing frame 53 via the positioning pivot point 591. The swing frame 53 rotates in counter clockwise direction under the spring force of the spring 57, till the tensioning wheel 3 tensions up the toothed belt 4. When the mill is started, tensile force is generated because the toothed belt 4 enters into moving state from still state instantly; under tensile force, the tensioning wheel 3 moves in clockwise direction and compresses the compression spring 57, so as to alleviate the pulling force exerted on the toothed belt 4 and prevent the toothed belt 4 from over-tensioned.

In case any foreign matter is entrapped between the fast roller 1, slow roller 2 or tensioning wheel 3 and the toothed belt 4, it is equivalent to that the pulling force on the toothed belt 4 is increased instantly; in that case, the tensioning wheel 3 will also deflects the compression spring 57 in clockwise direction, and thereby alleviate the instant tensile force and protect the toothed belt 4 from damaged. Of course, when the tension of the toothed belt 4 is to be decreased, the adjusting nut 58 can be adjusted so that it moves downwards and thereby alleviate the tension of the toothed belt 4. In addition, when the toothed belt 4 is to be replaced, the adjusting nut 58 can be removed, so that the spring 57 won't apply force on the swing frame 53 and thereby the tensioning wheel 3 can be turned in clockwise direction; after the toothed belt 4 is replaced, the adjusting nut 58 can be mounted again and adjusted to an appropriate position.

In the mill roller transmission mechanism and the mill comprising the mill roller transmission mechanism set forth in the present invention, the tensioning mechanism is designed to be an elastic adjustable mechanism, so that when the tensioning wheel is engaged with the inner tooth wall of the toothed belt, there is a margin for buffering, and, at the moment the mill is started or when any hard foreign matter is entrapped between the engaged surfaces of the toothed belt and roller, the tension of the toothed belt may be buffered through the elasticity of the tensioning mechanism; thus, over-tensioning of the toothed belt can be avoided, and the service life of the toothed belt can be prolonged; in addition, the pitch of the teeth on the outer toothed surface of the toothed belt is optimized, to improve power transmission and stability; the outer peripheral surface of the tensioning wheel is optimized, to make it easy to mount the toothed belt.

## Claims

1. A mill roller transmission mechanism comprising a frame (7), a fast roller (1), a slow roller (2) and a toothed belt (4);
wherein the toothed belt (4) is provided with an inner toothed surface and an outer toothed surface, the inner toothed surface of the toothed belt (4) is engaged with a peripheral surface of the fast roller (1), the outer toothed surface of the toothed belt (4) is engaged with a peripheral surface of the slow roller (2);
wherein the mill roller transmission mechanism further comprises:
a tensioning seat (51) fixed to the frame (7);
a support shaft (52), with one end pivot-jointed to the tensioning seat (51);
a swing frame (53), with one side fixed to the support shaft (52) and driving the support shaft (52) to rotate;
a rolling shaft (54), pivot-jointed to the other side of the swing frame (53), with its axial direction parallel to the axial direction of the support shaft (52);
a tensioning wheel (3), with its central axle hole fitted over and fixed to the rolling shaft (54) and its peripheral surface engaged with the inner toothed surface of the toothed belt (4)
a press mechanism connected between the swing frame (53) and the tensioning seat (51) in an elastically adjustable manner and designed to adjust the deflection angle of the swing frame (53);
wherein the press mechanism comprises:
a tension rod (55), with one end connected to the tensioning seat (51) and the other end provided with threads, wherein the tension rod (55) is pivot-jointed to the tensioning seat (51) via a connecting shaft (56);
a spring (57) fitted over the rod of the tension rod (55) with its top end biased on the swing frame (53);
an adjusting nut (58) fitted over the end of the tension rod (55) provided with threads and abutting the bottom of the spring (57);
wherein a first gasket (59) is provided between the top end of the spring (57) and the swing frame (53), and a second gasket (6) is provided between the spring (57) and the adjusting nut (58); wherein the first gasket (59) has a positioning pivot point (591) located on the jointing part with the swing frame (53), and the swing frame (53) has a recessed part (531) corresponding to the positioning pivot point (591).

2. The mill roller transmission mechanism according to claim 1, **characterized in that** the inner toothed surface of the toothed belt (4) is provided with V-wedge grooves (41) arranged in the circumferential direction of the inner toothed surface of the toothed belt (4), and the outer peripheral surface of the fast roller (1) is provided with ribs, along the circumferential direction, corresponding to the V-wedge grooves (41).

3. The mill roller transmission mechanism according to claim 2, **characterized in that** the outer toothed surface of the toothed belt (4) is provided with tooth bodies (42) formed perpendicular to the length direction of the toothed belt (4) in the circumferential direction, and the outer peripheral surface of the slow roller (2) is provided with teeth in the circumferential direction, which are designed to engage with the tooth bodies (42) for transmission.

4. The mill roller transmission mechanism according to claim 3, **characterized in that** the pitch of the tooth bodies (42) is 10mm.

5. The mill roller transmission mechanism according to claim 4, **characterized in that** the outer peripheral surface of the tensioning wheel (3) is a smooth curved surface.

6. A mill, **characterized in that** the mill comprises the mill roller transmission mechanism as set forth in any of claims 1-5.

## Patentansprüche

1. Mühlenwalzenübertragungsmechanismus mit einem Rahmen (7), einer schnellen Walze (1), einer langsamen Walze (2), und einem Zahnriemen (4);
wobei der Zahnriemen (4) eine gezahnte Innenfläche und eine gezahnte Außenfläche aufweist, wobei die gezahnte Innenfläche des Zahnriemens (4) mit einer Umfangsfläche der schnellen Walze (1) in Eingriff steht, wobei die gezahnte Außenfläche des Zahnriemens (4) mit einer Umfangsfläche der langsamen Walze (2) in Eingriff steht;
wobei der Mühlenwalzenübertragungsmechanismus weiterhin aufweist:
einen Spannsitz (51), der an dem Rahmen (7) befestigt ist;
eine Tragwelle (52), die mit einem Ende mit dem Spannsitz (51) drehbar verbunden ist;
einen Schwenkrahmen (53), der mit einer Seite mit der Tragwelle (52) verbunden ist und die Tragwelle (52) in Drehung versetzt;
eine Walzwelle (54), die mit der anderen Seite des Schwenkrahmens (53) drehbar verbunden ist, und deren Axialrichtung parallel zur Axialrichtung der Tragwelle (52) ist;
ein Spannrad (3), das mit seiner zentralen Achsöffnung auf die Walzwelle (54) aufgesetzt ist und an dieser befestigt ist, wobei dessen Umfangsfläche mit der gezahnten Innenfläche des Zahnriemens (4) in Eingriff steht;
einen Pressmechanismus, der zwischen dem Schwenkrahmen (53) und dem Spannsitz (51) federnd einstellbar angebracht und so gebildet ist, dass der Auslenkungswinkel des Schwenkrahmens (53) eingestellt werden kann;
wobei der Pressmechanismus folgendes umfasst:
eine Spannstange (55), die mit einem Ende mit dem Spannsitz (51) verbunden ist und mit dem anderen Ende mit einem Gewinde versehen ist, wobei die Spannstange (55) mit dem Spannsitz (51) über eine Verbindungswelle (56) schwenkbar verbunden ist;
eine Feder (57), die auf die Stange der Spannstange (55) mit ihrem oberen Ende auf den Schwenkrahmen (53) vorgespannt aufgesetzt ist;
eine Einstellmutter (58), die auf das Ende der Spannstange (55) aufgesetzt ist und mit Gewinden versehen ist und an der Unterseite der Feder (57) anliegt;
wobei eine erste Dichtung (59) zwischen dem oberen Ende der Feder (57) und dem Schwenkrahmen (53) angeordnet ist, und eine zweite Dichtung (6) zwischen der Feder (57) und der Einstellmutter (58) angeordnet ist;
wobei die erste Dichtung (59) einen Positionierungsdrehpunkt (591) aufweist, der sich an dem Verbindungsabschnitt mit dem Schwenkrahmen (53) befindet, und der Schwenkrahmen (53) einen vertieften Abschnitt (531) aufweist, der mit dem Positionierungsdrehpunkt (591) korrespondiert.

2. Mühlenwalzenübertragungsmechanismus nach Anspruch 1, **dadurch gekennzeichnet, dass** die gezahnte Innenfläche des Zahnriemens (4) mit V-Keilnuten (41) versehen ist, die in Umfangsrichtung der gezahnten Innenfläche des Zahnriemens (4) angeordnet sind, und die Außenumfangsfläche der schnellen Walze (1) in Umfangsrichtung, korrespondierend zu den V-Keilnuten (41) mit Rippen versehen ist.

3. Mühlenwalzenübertragungsmechanismus nach Anspruch 2, **dadurch gekennzeichnet, dass** die gezahnte Außenfläche des Zahnriemens (4) mit Zahnkörpern (42) versehen ist, die senkrecht zur Längsrichtung des Zahnriemens (4) in Umfangsrichtung gebildet sind, und die Außenumfangsfläche der langsamen Walze (2) in Umfangsrichtung mit Zahnelementen versehen ist, die so gebildet sind, dass sie zur Transmission in die Zahnkörper (42) eingreifen.

4. Mühlenwalzenübertragungsmechanismus nach Anspruch 3, **dadurch gekennzeichnet, dass** der Abstand der Zahnkörper (42) 10 mm beträgt.

5. Mühlenwalzenübertragungsmechanismus nach Anspruch 4, **dadurch gekennzeichnet, dass** die Außenumfangsfläche des Spannrads (3) eine glatte, gekrümmte Fläche ist.

6. Mühle, **dadurch gekennzeichnet, dass** die Mühle den Mühlenwalzenübertragungsmechanismus nach einem der Ansprüche 1 bis 5 aufweist.

## Revendications

1. Mécanisme de transmission de laminoir comprenant un châssis (7), un rouleau rapide (1), un rouleau lent (2), et une courroie dentée (4),
dans lequel la courroie dentée (4) est pourvue d'une surface dentée interne et d'une surface dentée externe, la surface dentée interne de la courroie dentée (4) est mise en prise avec une surface périphérique du rouleau rapide (1), la surface dentée externe de la courroie dentée (4) est mise en prise avec une surface périphérique du rouleau lent (2),
dans lequel le mécanisme de transmission de laminoir comprend en outre :
un siège de tension (51) fixé au châssis (7),
un arbre de support (52) relié par un joint à pivot d'extrémité au siège de tension (51),
un cadre oscillant (53), dont un côté est fixé à l'arbre de support (52) et qui entraine l'arbre de support (52) en rotation,
un arbre de laminage (54), relié par un joint à pivot d'extrémité du cadre oscillant (53), et dont la direction axiale est parallèle à la direction axiale de l'arbre de support (52),
une roue de tension (3) dont l'orifice d'essieu central est emboité sur et fixé à l'arbre de laminage (54) et la surface périphérique est mise en prise avec la surface dentée interne de la courroie dentée (4) ;
un mécanisme de presse raccordé entre le cadre oscillant (53) et le siège de tension (51) d'une manière élastique réglable et conçu pour régler l'angle de déflexion du cadre oscillant (53),
dans lequel le mécanisme de presse comprend :
une barre de tension (55), dont une extrémité est raccordée au siège de tension (51) et l'autre extrémité est pourvue de filetages, dans lequel la barre de tension (55) est reliée par un joint à pivot au siège de tension (51) par l'intermédiaire d'un arbre de couplage (56),
un ressort (57) emboité sur la tige de la barre de tension (55) et dont l'extrémité supérieure est inclinée sur le cadre oscillant (53),
un écrou de réglage (58) emboité sur l'extrémité de la barre de tension (55) pourvue de filetages et en butée contre la partie inférieure du ressort (57) ;
dans lequel une première bague d'étanchéité (59) est prévue entre l'extrémité supérieure du ressort (57) et le cadre oscillant (53), et une seconde bague d'étanchéité (6) est prévue entre le ressort (57) et l'écrou de réglage (58),
dans lequel
la première bague d'étanchéité (59) présente un point de pivotement en position (591) situé sur la partie de raccordement avec le cadre oscillant (53), et le cadre oscillant (53) présente une partie en creux (531) qui correspond au point de pivotement en position (591).

2. Mécanisme de transmission de laminoir selon la revendication 1, **caractérisé en ce que** la surface dentée interne de la courroie dentée (4) est pourvue de rainures à portées obliques en V (41) agencées dans la direction de la circonférence de la surface dentée interne de la courroie dentée (4), et la surface périphérique externe du rouleau rapide (1) est pourvue de cannelures, dans la direction de la circonférence, qui correspondent aux rainures à portées obliques en V (41).

3. Mécanisme de transmission de laminoir selon la revendication 2, **caractérisé en ce que** la surface dentée interne de la courroie dentée (4) est pourvue de corps de dents (42) formés perpendiculairement à la direction longitudinale de la courroie dentée (4) dans la direction de la circonférence, et la surface périphérique externe du rouleau lent (2) est pourvue de dents dans la direction de la circonférence, qui sont conçus pour se mettre en prise avec les corps de dents (42) aux fins de transmission.

4. Mécanisme de transmission de laminoir selon la revendication 3, **caractérisé en ce que** le pas des corps de dents (42) est de 10 mm.

5. Mécanisme de transmission de laminoir selon la revendication 4, **caractérisé en ce que** la surface périphérique externe de la roue de tension (3) est une surface incurvée lisse.

6. Broyeur, **caractérisé en ce que** ledit broyeur comprend le mécanisme de transmission de laminoir selon l'une quelconque des revendications 1 à 5.
